# EUROPEAN PATENT SPECIFICATION

(11) **EP 2 563 145 B1**
(45) Date of publication and mention of the grant of the patent: **20.07.2016**
(21) Application number: 11714778.5
(22) Date of filing: 18.04.2011
(51) Int. Cl.: A01N 47/30, A01P 7/04

(54) **METHODS OF CONTROLLING NEONICOTINOID RESISTANT APHIDS**
VERFAHREN ZUR KONTROLLE VON NEONICOTINOID RESISTENTEN BLATTLÄUSEN
PROCÉDÉS DE CONTRÔLE DES PUCERONS RÉSISTANTS AUX NEONICOTINOIDES

(30) Priority: 27.04.2010 EP 10161126
(43) Date of publication of application: 06.03.2013
(73) Proprietor: Syngenta Participations AG, 4058 Basel (CH)
(72) Inventor: SLATER, Russell, CH-4332 Stein (CH)
(74) Representative: Syngenta International AG
(86) International application number: PCT/EP2011/056133
(87) International publication number: WO 2011/134822

(56) References cited:
- EP-A2- 0 736 252
- WO-A1-97/02746
- WO-A2-2010/020477
- RALF NAUEN AND IAN DENHOLM: "Resistance of insect pests to neonicotinoid insecticides: current status and future prospects", ARCHIVES OF INSECT BIOCHEMISTRY AND PHYSIOLOGY, ALAN R. LISS, NEW YORK, NY, US, vol. 58, no. 4, 1 April 2005 (2005-04-01), pages 200-215, XP009150173, ISSN: 0739-4462 [retrieved on 2005-03-01]
- I.ISHAAYA ET AL: "Insecticides with novel modes of action", ENTOMOLOGICAL RESEARCH, vol. 37, 2007, pages 148-152, XP055163123,

## Description

The invention relates to a method of controlling aphids that are resistant to neonicotinoid insecticides, using compounds of formula I 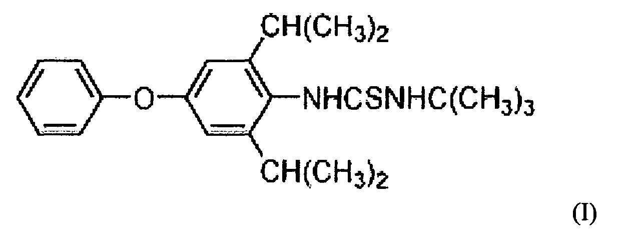 in free form or in agrochemically acceptable salt form as well as the use of compositions comprising said compounds to control neonicotinoid resistant insects. In particular the methods relate to controlling neonicotinoid resistant insects in the Aphididae family. Methods of the invention find particular use in controlling neonicotinoid resistant insects in crops of useful plants. Furthermore, the invention extends to methods of controlling plant viruses spread by such neonicotinoid resistant insects.

Plants exhibiting aphid damage can have a variety of symptoms, such as decreased growth rates, mottled leaves, yellowing, stunted growth, curled leaves, browning, wilting, low yields and death. The removal of sap creates a lack of vigour in the plant, and aphid saliva is toxic to plants. Aphids frequently transmit disease-causing organisms like plant viruses to their hosts. The green peach aphid (Myzus persicae) is a vector for more than 110 plant viruses. Cotton aphids (Aphis gossypii) often infect sugarcane, papaya and groundnuts with viruses. Aphids contributed to the spread of late blight (Phytophthora infestans) among potatoes in the Great Irish Potato Famine of the 1840s.

The cherry aphid or black cherry aphid, Myzus cerasi, is responsible for some leaf curl of cherry trees. This can easily be distinguished from 'leaf curl' caused by Taphrina fungus species due to the presence of aphids beneath the leaves.

The coating of plants with honeydew can contribute to the spread of fungi which can damage plants. Honeydew produced by aphids has been observed to reduce the effectiveness of fungicides as well.

The damage of plants, and in particular commercial crops, has resulted in large amounts of resources and efforts being spent attempting to control the activities of aphids.

The neonicotinoids represent the fastest-growing class of insecticides introduced to the market since the commercialization of pyrethroids (Nauen & Denholm, 2005: Archives of Insect Biochemistry and Physiology 58:200-215) and are extremely valuable insect control agents not least because they had exhibited little or no cross-resistance to the older insecticide classes, which suffer markedly from resistance problems. However, reports of insect resistance to the neonicotinoid class of insecticides are on the increase.

The increase in resistance of such insects to neonicotinoid insecticides thus poses a significant threat to the cultivation of a number of commercially important crops, and there is thus a need to find alternative insecticides capable of controlling neonicotinoid resistant insects (i.e. to find insecticides that do not exhibit any cross-resistance with the neonicotinoid class).

The compound of formula I (*N*-[2,6-bis(1-methylethyl)-4-phenoxyphenyl]-*N*'-(1,1-dimethylethyl)thiourea) is known by the common name diafenthiuron - pesticide manual entry 229.

I Ishaaya et al, Entomological Research, 2007, 37, pages 148-152 teaches diafenthiuron as important component in pest and resistance management programs.

The present invention is based on the finding that diafenthiuron can be successfully used to control neonicotinoid resistant populations of insects in the Aphididae family.

Thus in the first aspect of the invention there is provided a method of controlling insects from the Aphididae family which are resistant to a neonicotinoid insecticide, which method comprises applying the active ingredient diafenthiuron in free form or in agrochemically acceptable salt form to said neonicotinoid resistant insects.

By virtue of the surprising ability of diafenthiuron to control such neonicotinoid resistant insects, the invention also provides a method of protecting a crop of useful plants, wherein said crop is under attack from such insects. Such a method involves applying to said crop, treating a plant propagation material of said crop with, and/or applying to said insects, a composition comprising the diafenthiuron in free form or in agrochemically acceptable salt form.

Since the active ingredient diafenthiuron does not exhibit cross-resistance to neonicotinoid resistant aphids, it may be used in a resistance management strategy with a view to controlling resistance to the neonicotinoid class of insecticides. Such a strategy may involve applying a composition comprising a mixture of a neonicotinoid and diafenthiuron , or alternating applications of a composition comprising the diafenthiuron and a composition comprising a neonicotinoid insecticide, either on an application by application alternation (including different types of application, such as treatment of plant propagation material and foliar spray), or seasonal/crop alternation basis (e.g. use a diafenthiuron on a first crop/for control in a first growing season, and use a neonicotinoid insecticide for a subsequent crop/growing season, or *vice versa*), and this forms yet a further aspect of the invention. In an embodiment, the neonicotinoid is thiamethoxam or imidacloprid, preferably thiamethoxam.

In an embodiment, present invention makes available a mixture of comprising diafenthiuron and one or more of acetamiprid, clothianidin, dinotefuran, imidacloprid, nitenpyram, thiacloprid, and thiamethoxam.

As mentioned herein, not only are insects from the *Aphididae family* pests of a number of commercially important crops, the viruses that these insects carry also pose a threat. With the emergence of resistance to neonicotinoid insecticides, the severity of this threat has increased. Thus, a further aspect of the invention provides a method of controlling a plant virus in a crop of useful plants under attack by neonicotinoid resistant insects which carry said plant virus, which method comprises applying to said crop, treating a plant propagation material of said crop with, and/or applying to said insects, the active ingredient diafenthiuron in free form or in agrochemically acceptable salt form. Examples of plant viruses that may be controlled according to this aspect of the invention include Sobemovirus, Caulimovirus (Caulimoviridae), Closterovirus (Closteroviridae), Sequivirus (Sequiviridae), Enamovirus (Luteoviridae), Luteovirus (Luteoviridae), Polerovirus (Luteoviridae), Umbravirus, Nanovirus (Nanoviridae), Cytorhabdovirus (Rhabdoviridae), Nucleorhabdovirus (Rhabdoviridae).

Methods of the invention as described herein may also involve a step of assessing whether insects are resistant to neonicotinoid insecticides and/or whether said insects carry a plant virus. This step will in general involve collecting a sample of insects from the area (e.g. crop, field, habitat) to be treated, before actually applying diafenthiuron, and testing (for example using any suitable phenotypic, biochemical or molecular biological technique applicable) for resistance/sensitivity and/or the presence or absence of a virus.

The term neonicotinoid insecticide as used herein refers to any insecticidal compound that acts at the insect nicotinic acetylcholine receptor, and in particular refers to those compounds classified as neonicotinoid insectides according to Yamamoto (1996, Agrochem Jpn 68:14-15). Examples of neonicotinoid insecticides include those in Group 4A of the IRAC (insecticide resistance action committee, Crop Life) mode of action classification scheme, e.g. acetamiprid, clothianidin, dinotefuran, imidacloprid, nitenpyram, thiacloprid, and thiamethoxam, as well as any compound having the same mode of action.

By the terms "control" or "controlling" as applied to insects, it is meant that the targeted insects are repelled from or less attracted to the crops to be protected. Additionally, as applied to insects, the terms "control" or "controlling" may also refer to the inability, or reduced ability, of the insects to feed or lay eggs. These terms may further include that the targeted insects are killed.

Thus the method of the invention may involve the use of an amount of the active ingredient that is sufficient to repel insects (i.e a repellently effective amount of active ingredient), an amount of the active ingredient that is sufficient to stop insects feeding, or it may involve the use of an insecticidally effective amount of active ingredient (i.e. an amount sufficient to kill insects), or any combination of the above effects. Where the terms "control" or "controlling" are applied to viruses it is meant that the level of viral infection of a crop of useful plants is lower than would be observed in the absence of any application of diafenthiuron.

The terms "applying" and "application" are understood to mean direct application to the insect to be controlled, as well as indirect application to said insect, for example through application to the crop or plant on which the insect acts as pest, or to the locus of said crop or insect, or indeed through treatment of the plant propagation material of said crop of plant.

Thus diafenthiuron may be applied by any of the known means of applying pesticidal compounds. For example, it may be applied, formulated or unformulated, to the pests or to a locus of the pests (such as a habitat of the pests, or a growing plant liable to infestation by the pests) or to any part of the plant, including the foliage, stems, branches or roots, to the plant propagation material, such as seed, before it is planted or to other media in which plants are growing or are to be planted (such as soil surrounding the roots, the soil generally, paddy water or hydroponic culture systems), directly or it may be sprayed on, dusted on, applied by dipping, applied as a cream or paste formulation, applied as a vapour or applied through distribution or incorporation of a composition (such as a granular composition or a composition packed in a water-soluble bag) in soil or an aqueous environment.

The methods of the invention are particularly applicable to the control of neonicotinoid resistant insects (and neonicotinoid resistance in insects) of the family Aphididae, such as: Acyrthosiphum pisum, Aphis citricola, Aphis craccivora, Aphis fabae, Aphis frangulae, Aphis glycines, Aphis gossypii, Aphis nasturtii, Aphis pomi, Aphis spiraecola, Aulacorthum solani, Brachycaudus helichrysi, Brevicoryne brassicae, Diuraphis noxia, Dysaphis devecta, Dysaphis plantaginea, Eriosoma lanigerum, Hyalopterus pruni, Lipaphis erysimi, Macrosiphum avenae, Macrosiphum euphorbiae, Macrosiphum rosae, Myzus cerasi F., Myzus nicotianae, Myzus persicae, Nasonovia ribisnigri, Pemphigus bursarius, Phorodon humuli, Rhopalosiphum insertum Wa, Rhopalosiphum maidis Fitch, Rhopalosiphum padi L., Schizaphis graminum Rond., Sitobion avenae, Toxoptera aurantii, Toxoptera citricola, Phylloxera vitifoliae, Acyrthosiphon dirhodum, Acyrthosiphon solani, Aphis forbesi, Aphis grossulariae, Aphis idaei, Aphis illinoisensis, Aphis maidiradicis, Aphis ruborum, Aphis schneideri, Brachycaudus persicaecola, Cavariella aegopodii Scop., Cryptomyzus galeopsidis, Cryptomyzus ribis, Hyadaphis pseudobrassicae, Hyalopterus amygdali, Hyperomyzus pallidus, Macrosiphoniella sanborni, Metopolophium dirhodum, Myzus malisuctus, Myzus varians, Neotoxoptera sp, Nippolachnus piri Mats., Oregma lanigera Zehnter, Rhopalosiphum fitchii Sand., Rhopalosiphum nymphaeae, Rhopalosiphum sacchari Ze, Sappaphis piricola Okam. + T, Schizaphis piricola, Toxoptera theobromae Sch, and Phylloxera coccinea.

Specific examples of neonicotinoid resistant aphids include Acyrthosiphum pisum, Aphis citricola, Aphis craccivora, Aphis fabae, Aphis frangulae, Aphis glycines, Aphis gossypii, Aphis nasturtii, Aphis pomi, Aphis spiraecola, Aulacorthum solani, Brachycaudus helichrysi, Brevicoryne brassicae, Diuraphis noxia, Dysaphis devecta, Dysaphis plantaginea, Eriosoma lanigerum, Hyalopterus pruni, Lipaphis erysimi, Macrosiphum avenae, Macrosiphum euphorbiae, Macrosiphum rosae, Myzus cerasi F., Myzus nicotianae, Myzus persicae, Nasonovia ribisnigri, Pemphigus bursarius, Phorodon humuli, Rhopalosiphum insertum Wa, Rhopalosiphum maidis Fitch, Rhopalosiphum padi L., Schizaphis graminum Rond., Sitobion avenae, Toxoptera aurantii, Toxoptera citricola, and Phylloxera vitifoliae.

In an embodiment, the neonicotinoid resistant aphids are one or more of Aphis gossypii and Myzus persicae.

In an embodiment, a neonicotinoid resistant aphid controlled by the compound of the invention is also resistant to pyrethroid insecticides, such as Lambda-cyhalothrin.

Crops of useful plants that may be protected according to the invention, and to which diafenthiuron may be applied in accordance with the invention, include: cereals, such as wheat, barley, rye, oats, rice, maize (fodder maize and sugar maize / sweet and field corn) or sorghum; beet, such as sugar or fodder beet; fruit, for example pomaceous fruit, stone fruit, tree nut or soft fruit, such as apples, pears, plums, peaches, bananas, almonds, walnuts, pistachios, cherries or berries, for example strawberries, raspberries or blackberries; leguminous crops, such as beans, lentils, peas or soya; oil crops, such as oilseed rape, mustard, poppies, olives, sunflowers, coconut, castor, cocoa or ground nuts; cucurbits, such as pumpkins, marrow, cucumbers or melons; fibre plants, such as cotton, flax, hemp or jute; citrus fruit, such as oranges, lemons, clementines, grapefruit or tangerines; vegetables, such as spinach, lettuce, asparagus, cabbages, iceberg, carrots, onions, tomatoes, paprika, potatoes or bell peppers; Lauraceae, such as avocado, Cinnamonium or camphor; and also tobacco, nuts, coffee, eggplants, sugarcane, tea, pepper, grapevines, hops, the plantain family, latex plants, lawn, turf, fodder grass, and ornamentals, such as petunias, geranium/pelargoniums, pansies and impatiens; and shrubs, broad-leaved trees and evergreens, such as conifers.

Crops of useful plants are to be understood as including those which are/have been made tolerant to herbicides or classes of herbicide (such as, for example, imidazolinones such as imazamox, as is the case with Clearfield® Rice) and/or insecticide or classes of insecticide, and/or which have acquired a so-called "output" trait (e.g. improved storage stability, higher nutritional value, improved yield etc.) by conventional plant-breeding or genetic engineering methods.

Thus useful plants include those where the plants are transgenic, or where the plants have inherited a trait as a consequence of the introduction at least one transgene in their lineage.

Table below lists key aphids and crops they target.

| **PEST** | **COMMON NAME** | **EXAMPLES OF CROPS** |
|---|---|---|
| Acyrthosiphum pisum | Pea aphid | pea |
| Aphis citricola | Citrus aphid | citrus |
| Aphis craccivora | Cowpea aphid | vegetables, beans, sugarbeet |
| Aphis fabae | Black bean aphid | vegetables, beans, sugarbeet |
| Aphis frangulae | Breaking buckthorn aphid | cotton potato |
| Aphis glycines | Soybean aphid | soybean |
| Aphis gossypii | Cotton aphid | cotton, vegetables, citrus, potato |
| Aphis nasturtii | Buckthorn aphid | potato |
| Aphis pomi | Green apple aphid | apple |
| Aphis spiraecola | Green citurs aphis | apple, citrus, papaya |
| Aulacorthum solani | Foxglove aphid | citrus, sugar beet |
| Brachycaudus helichrysi | Plum aphid | peach, stone fruits |
| Brevicoryne brassicae | Cabbage aphid | brassica |
| Diuraphis noxia | Russion wheat aphid | cereals |
| Dysaphis devecta | Leaf-curling aphid | pome fruits |
| Dysaphis plantaginea | Rosy apple aphid | pome fruits, stone fruits |
| Eriosoma lanigerum | Wooly apple aphid | pome fruits, stone fruits |
| Hyalopterus pruni | Mealy plum aphid | stone fruits |
| Lipaphis erysimi | False cabbage aphid | brassica |
| Macrosiphum avenae | Grain aphid | cereals |
| Macrosiphum euphorbiae | Potato aphid | potato, sugar beet, vegetables |
| Macrosiphum rosae | Rose aphid | ornamentals |
| Myzus cerasi F. | Black cherry aphid | cherry, stone fruits |
| Myzus nicotianae | Tobacco aphid | tobacco |
| Myzus persicae | Peach aphid | peach, deciduous fruits, vegetables, sugarbeet, potato, cereals, sugarcane, maize, ornamentals |
| Myzus persicae | Green peach aphid | peach, deciduous fruits, vegetables, sugarbeet, potato, cereals, sugarcane, maize, ornamentals |
| Nasonovia ribisnigri | Lettuce aphid | vegetables |
| Pemphigus bursarius | Lettuce root aphid | vegetables |
| Phorodon humuli | Hop aphid | hops |
| Rhopalosiphum insertum Wa | Apple-grass aphid | Deciduous fruits, ornamentals |
| Rhopalosiphum maidis Fitch | Corn leaf aphid | Maize, cereals |
| Rhopalosiphum padi L. | Wheat aphid | Maize, cereals |
| Schizaphis graminum Rond. | Spring grain aphid | cereals |
| Sitobion avenae | Wheat aphid | cereals |
| Toxoptera aurantii | Citrus aphid | citrus |
| Toxoptera citricola | Black citrus aphid | citrus |
| Phylloxera vitifoliae | Grape Phylloxera | vine |

The term "plant propagation material" is understood to denote all the generative parts of the plant, such as seeds, which can be used for the multiplication of the latter and vegetative plant materials such as cuttings and tubers (for example, potatoes). Accordingly, as used herein, part of a plant includes propagation material. There may be mentioned, e.g., the seeds (in the strict sense), roots, fruits, tubers, bulbs, rhizomes, parts of plants. Germinated plants and young plants, which are to be transplanted after germination or after emergence from the soil, may also be mentioned. These young plants may be protected before transplantation by a total or partial treatment by immersion.

Parts of plant and plant organs that grow at later point in time are any sections of a plant that develop from a plant propagation material, such as a seed. Parts of plant, plant organs, and plants can also benefit from the pest damage protection achieved by the application of the compound on to the plant propagation material. In an embodiment, certain parts of a plant and certain plant organs that grow at later point in time can also be considered as plant propagation material, which can themselves be applied (or treated) with the compound; and consequently, the plant, further parts of the plant and further plant organs that develop from the treated parts of plant and treated plant organs can also benefit from the pest damage protection achieved by the application of the compound on to the certain parts of plant and certain plant organs.

Methods for applying or treating pesticidal active ingredients on to plant propagation material, especially seeds, are known in the art, and include dressing, coating, pelleting and soaking application methods of the propagation material. It is preferred that the plant propagation material is a seed.

Although it is believed that the present method can be applied to a seed in any physiological state, it is preferred that the seed be in a sufficiently durable state that it incurs no damage during the treatment process. Typically, the seed would be a seed that had been harvested from the field; removed from the plant; and separated from any cob, stalk, outer husk, and surrounding pulp or other non-seed plant material. The seed would preferably also be biologically stable to the extent that the treatment would cause no biological damage to the seed. It is believed that the treatment can be applied to the seed at any time between harvest of the seed and sowing of the seed or during the sowing process (seed directed applications). The seed may also be primed either before or after the treatment.

Even distribution of the compound and adherence thereof to the seeds is desired during propagation material treatment. Treatment could vary from a thin film (dressing) of a formulation containing the compound, for example, a mixture of active ingredient(s), on a plant propagation material, such as a seed, where the original size and/or shape are recognizable to an intermediary state (such as a coating) and then to a thicker film (such as pelleting with many layers of different materials (such as carriers, for example, clays; different formulations, such as of other active ingredients; polymers; and colourants) where the original shape and/or size of the seed is no longer recognisable.

The seed treatment occurs to an unsown seed, and the term "unsown seed" is meant to include seed at any period between the harvest of the seed and the sowing of the seed in the ground for the purpose of germination and growth of the plant.

Treatment to an unsown seed is not meant to include those practices in which the active ingredient is applied to the soil but would include any application practice that would target the seed during the planting process.

Preferably, the treatment occurs before sowing of the seed so that the sown seed has been pre-treated with the compound. In particular, seed coating or seed pelleting are preferred in the treatment of the compound. As a result of the treatment, the compound is adhered on to the seed and therefore available for pest control.

The treated seeds can be stored, handled, sowed and tilled in the same manner as any other active ingredient treated seed.
The compound diafenthiuron and its agrochemically acceptable salts may be made, for example, as described in GB 2060626

Agrochemically acceptable salts of the compounds of formula I are, for example, acid addition salts. Those salts are formed, for example, with strong inorganic acids, such as mineral acids, for example perchloric acid, sulfuric acid, nitric acid, nitrous acid, a phosphoric acid or a hydrohalic acid, with strong organic carboxylic acids, such as unsubstituted or substituted, for example halogen-substituted, C₁-C₄ alkanecarboxylic acids, for example formic acid, acetic acid or trifluoroacetic acid, unsaturated or saturated dicarboxylic acids, for example oxalic, malonic, succinic, maleic, fumaric or phthalic acid, hydroxycarboxylic acids, for example ascorbic, lactic, malic, tartaric or citric acid, or benzoic acid, or with organic sulfonic acids, such as unsubstituted or substituted, for example halogen-substituted, C₁-C₄ alkane- or aryl-sulfonic acids, for example methane- or p-toluene-sulfonic acid. In view of the close relationship between the compounds of formula I in free form and in the form of their agrochemically acceptable salts, hereinbefore and hereinafter any reference to the free compounds of formula I or their agrochemically acceptable salts is to be understood as including also the corresponding agrochemically acceptable salts or the free compounds of formula I, respectively, where appropriate and expedient. In preferred embodiments the methods of the invention employ the free form of diafenthiuron.

In order to apply an active ingredient to neonicotinoid resistant insects and/or crops of useful plants as required by the methods of the invention said active ingredient may be used in pure form or, more typically, formulated into a composition which includes, in addition to said active ingredient, a suitable inert diluent or carrier and optionally, a surface active agent (SFA). SFAs are chemicals which are able to modify the properties of an interface (for example, liquid/solid, liquid/air or liquid/liquid interfaces) by lowering the interfacial tension and thereby leading to changes in other properties (for example dispersion, emulsification and wetting). SFAs include non-ionic, cationic and/or anionic surfactants, as well as surfactant mixtures.

Thus in further embodiments according to any aspect of the invention mentioned hereinbefore, the active ingredient will be in the form of a composition additionally comprising a agriculturally acceptable carrier or diluent.

It is preferred that all compositions (both solid and liquid formulations) for use in the invention comprise, by weight, from 0.0001 to 95% (inclusive), more preferably from 1 to 85% (inclusive), for example from 5 to 60% (inclusive), of active ingredient. The composition is generally used in methods of the invention such that the active ingredient is applied at a concentration are from 0.1 to 1000 ppm, preferably from 0.1 to 500 ppm, of active ingredient. In particular, spray mixtures with active ingredient concentrations of 50, 100, 200, 300 or 500 ppm are used.

The rates of application (use) of a the compound vary, for example, according to type of use, type of crop, type of plant propagation material (if appropriate), but is such that the active ingredient is in an effective amount to provide the control (such as pest control) and can be determined by trials and routine experimentation known to one of ordinary skill in the art.

The rates of application per hectare are generally from 1 to 2000 g of active ingredient per hectare, especially from 10 to 1000 g/ha, preferably from 20 to 600 g/ha, more preferably from 12.5 to 500 g/ha, especially from 50 to 400 g/ha. Rates of application of 50, 100, 150, 200, 250, 300, or 400 g of active ingredient per hectare are preferred. In the instance, the compound is treated on to the plant propagation material, the corresponding rates would apply.

The compositions can be chosen from a number of formulation types, including dustable powders (DP), soluble powders (SP), water soluble granules (SG), water dispersible granules (WG), wettable powders (WP), granules (GR) (slow or fast release), soluble concentrates (SL), oil miscible liquids (OL), ultra low volume liquids (UL), emulsifiable concentrates (EC), dispersible concentrates (DC), emulsions (both oil in water (EW) and water in oil (EO)), micro-emulsions (ME), suspension concentrates (SC), aerosols, fogging/smoke formulations, capsule suspensions (CS) and seed treatment formulations. The formulation type chosen in any instance will depend upon the particular purpose envisaged and the physical, chemical and biological properties of the compound of formula (I).

Dustable powders (DP) may be prepared by mixing the active ingredient with one or more solid diluents (for example natural clays, kaolin, pyrophyllite, bentonite, alumina, montmorillonite, kieselguhr, chalk, diatomaceous earths, calcium phosphates, calcium and magnesium carbonates, sulfur, lime, flours, talc and other organic and inorganic solid carriers) and mechanically grinding the mixture to a fine powder.

Soluble powders (SP) may be prepared by mixing a compound of formula (I) with one or more water-soluble inorganic salts (such as sodium bicarbonate, sodium carbonate or magnesium sulfate) or one or more water-soluble organic solids (such as a polysaccharide) and, optionally, one or more wetting agents, one or more dispersing agents or a mixture of said agents to improve water dispersibility/solubility. The mixture is then ground to a fine powder. Similar compositions may also be granulated to form water soluble granules (SG).

Wettable powders (WP) may be prepared by mixing the active ingredient with one or more solid diluents or carriers, one or more wetting agents and, preferably, one or more dispersing agents and, optionally, one or more suspending agents to facilitate the dispersion in liquids. The mixture is then ground to a fine powder. Similar compositions may also be granulated to form water dispersible granules (WG).

Granules (GR) may be formed either by granulating a mixture of the active ingredient and one or more powdered solid diluents or carriers, or from pre-formed blank granules by absorbing the active ingredient (or a solution thereof, in a suitable agent) in a porous granular material (such as pumice, attapulgite clays, fuller's earth, kieselguhr, diatomaceous earths or ground corn cobs) or by adsorbing the active ingredient (or a solution thereof, in a suitable agent) on to a hard core material (such as sands, silicates, mineral carbonates, sulfates or phosphates) and drying if necessary. Agents which are commonly used to aid absorption or adsorption include solvents (such as aliphatic and aromatic petroleum solvents, alcohols, ethers, ketones and esters) and sticking agents (such as polyvinyl acetates, polyvinyl alcohols, dextrins, sugars and vegetable oils). One or more other additives may also be included in granules (for example an emulsifying agent, wetting agent or dispersing agent).

Dispersible Concentrates (DC) may be prepared by dissolving the active ingredient in water or an organic solvent, such as a ketone, alcohol or glycol ether. These solutions may contain a surface active agent (for example to improve water dilution or prevent crystallisation in a spray tank).

Emulsifiable concentrates (EC) or oil-in-water emulsions (EW) may be prepared by dissolving the active ingredient in an organic solvent (optionally containing one or more wetting agents, one or more emulsifying agents or a mixture of said agents). Suitable organic solvents for use in ECs include aromatic hydrocarbons (such as alkylbenzenes or alkylnaphthalenes, exemplified by SOLVESSO 100, SOLVESSO 150 and SOLVESSO 200; SOLVESSO is a Registered Trade Mark), ketones (such as cyclohexanone or methylcyclohexanone) and alcohols (such as benzyl alcohol, furfuryl alcohol or butanol), N-alkylpyrrolidones (such as N-methylpyrrolidone or N-octylpyrrolidone), dimethyl amides of fatty acids (such as C₈-C₁₀ fatty acid dimethylamide) and chlorinated hydrocarbons. An EC product may spontaneously emulsify on addition to water, to produce an emulsion with sufficient stability to allow spray application through appropriate equipment. Preparation of an EW involves obtaining a compound of formula (I) either as a liquid (if it is not a liquid at room temperature, it may be melted at a reasonable temperature, typically below 70°C) or in solution (by dissolving it in an appropriate solvent) and then emulsifiying the resultant liquid or solution into water containing one or more SFAs, under high shear, to produce an emulsion. Suitable solvents for use in EWs include vegetable oils, chlorinated hydrocarbons (such as chlorobenzenes), aromatic solvents (such as alkylbenzenes or alkylnaphthalenes) and other appropriate organic solvents which have a low solubility in water.

Microemulsions (ME) may be prepared by mixing water with a blend of one or more solvents with one or more SFAs, to produce spontaneously a thermodynamically stable isotropic liquid formulation. The active ingredient is present initially in either the water or the solvent/SFA blend. Suitable solvents for use in MEs include those hereinbefore described for use in ECs or in EWs. A ME may be either an oil-in-water or a water-in-oil system (which system is present may be determined by conductivity measurements) and may be suitable for mixing water-soluble and oil-soluble pesticides in the same formulation. A ME is suitable for dilution into water, either remaining as a microemulsion or forming a conventional oil-in-water emulsion.

Suspension concentrates (SC) may comprise aqueous or non-aqueous suspensions of finely divided insoluble solid particles the active ingredient. SCs may be prepared by ball or bead milling the solid active ingredient in a suitable medium, optionally with one or more dispersing agents, to produce a fine particle suspension of the compound. One or more wetting agents may be included in the composition and a suspending agent may be included to reduce the rate at which the particles settle. Alternatively, the active ingredient may be dry milled and added to water, containing agents hereinbefore described, to produce the desired end product.

Aerosol formulations comprise the active ingredient and a suitable propellant (for example *n*-butane). Active ingredients may also be dissolved or dispersed in a suitable medium (for example water or a water miscible liquid, such as *n*-propanol) to provide compositions for use in non-pressurised, hand-actuated spray pumps.

The active ingredient may be mixed in the dry state with a pyrotechnic mixture to form a composition suitable for generating, in an enclosed space, a smoke containing the compound.

Capsule suspensions (CS) may be prepared in a manner similar to the preparation of EW formulations but with an additional polymerisation stage such that an aqueous dispersion of oil droplets is obtained, in which each oil droplet is encapsulated by a polymeric shell and contains the active ingredient and, optionally, a carrier or diluent therefor. The polymeric shell may be produced by either an interfacial polycondensation reaction or by a coacervation procedure. The compositions may provide for controlled release of the compound of the active ingredient. Active ingredients may also be formulated in a biodegradable polymeric matrix to provide a slow, controlled release of the compound.

A composition may include one or more additives to improve the biological performance of the composition (for example by improving wetting, retention or distribution on surfaces; resistance to rain on treated surfaces; or uptake or mobility of the active ingredient. Such additives include surface active agents, spray additives based on oils, for example certain mineral oils, natural plant oils (such as soy bean and rape seed oil) and/or modified plant oils (e.g. esterified plant oils), and blends of these with other bio-enhancing adjuvants (ingredients which may aid or modify the action of the active ingredient.

Preferred compositions for use in methods of the invention are composed in particular of the following constituents (throughout, percentages are by weight): Emulsifiable concentrates (EC):
active ingredient: 1 to 90%, preferably 5 to 20%
SFA: 1 to 30%, preferably 10 to 20%
solvent: 5 to 98%, preferably 70 to 85%

Dusts (DP):
active ingredient: 0.1 to 10%, preferably 0.1 to 1%
solid carrier/diluent: 99.9 to 90%, preferably 99.9 to 99%

Suspension concentrates (SC):
active ingredient: 5 to 75%, preferably 10 to 50%
water: 94 to 24%, preferably 88 to 30%
SFA: 1 to 40%, preferably 2 to 30%

Wettable powders (WP):
active ingredient: 0.5 to 90%, preferably 1 to 80%, more preferably 20 to 30% SFA: 0.5 to 20%, preferably 1 to 15%
solid carrier: 5 to 99%, preferably 15 to 98%

Granules (GR, SG, WG):
active ingredient: 0.5 to 60%, preferably 5 to 60%, more preferably 50 to 60% solid carrier/diluent: 99.5 to 40%, preferably 95 to 40%, more preferably 50 to 40%

Diafenthiuron may be applied to a neonicotinoid resistant insect or crop of useful plants using any standard application method with which the skilled man is familiar, such as foliar spay or treatment of the plant propagation materials of the crop. Similarly, for methods of controlling insect resistance, neonicotinoid insecticides may be applied to an insect/crop/plant propagation material of useful plants using any known method of application. Further guidance may be found in the art, which includes for example, advice on application given on the labels of commercially available products.

Examples of typical formulations are provided below (throughout, percentages are by weight)

| **Example F1:** Solutions | a) | b) | c) | d) |
|---|---|---|---|---|
| active ingredient | 80% | 10% | 5% | 95% |
| ethylene glycol monomethyl ether | 20% | - | - | - |
| polyethylene glycol (mol. wt 400) | - | 70% | - | - |
| N-methyl-2-pyrrolidone | - | 20% | - | - |
| epoxidised coconut oil | - | - | 1 % | 5% |
| petroleum fraction (boiling range 160-190.degree.) | - | - | 94% | - |

These solutions are suitable for application in the form of micro-drops.

| **Example F2:** Granules | a) | b) | c) | d) |
|---|---|---|---|---|
| active ingredient | 5% | 10% | 8% | 21% |
| Kaolin | 94% | - | 79% | 54% |
| Highly dispersed silicic acid | 1% | - | 13% | 7% |
| Attapulgite | - | 90% | - | 18% |

The active ingredient is dissolved in dichloromethane, the solution is sprayed onto the carrier, and the solvent is subsequently evaporated off in vacuo.

| **Example F3:** Dusts | a) | b) |
|---|---|---|
| active ingredient | 2% | 5% |
| Highly dispersed silicic acid | 1% | 5% |
| Talcum | 97% | - |
| Kaolin | - | 90% |

Ready-for-use dusts are obtained by intimately mixing the carriers with the active ingredient.

| **Example F4:** Wettable powders | |
|---|---|
| active ingredient | 25% |
| Sodium sulphate | 5% |
| castor oil polyethylene glycol ether (36-37 mol of ethylene oxide) | 10% |
| silicone oil | 1% |
| Agridex | 2% |
| highly dispersed silicic acid | 10% |
| kaolin powder | 37% |
| sulfite spent lye powder | 5% |
| Ultravon W-300% (disodium salt of 1-benzyl-2 heptadecylbenzimidazole-X,X'-disulfonic acid) | 5% |

The active ingredient is mixed with the other formulation components and the mixture is ground in a suitable mill, affording wettable powders which can be diluted with water to give suspensions of the desired concentration.

| **Example F5:** Dusts | a) | b) |
|---|---|---|
| active ingredient | 5% | 8% |
| Talcum | 95% | - |
| Kaolin | - | 92% |

Ready-for-use dusts are obtained by mixing the active ingredient with the carrier and grinding the mixture in a suitable mill.

| **Example F6:** Extruder granules | |
|---|---|
| active ingredient | 10% |
| Sodium lignosulfonate | 2% |
| Carboxymethylcellulose | 1% |
| Kaolin | 87% |

The active ingredient is mixed and ground with the other formulation components, and the mixture is subsequently moistened with water. The moist mixture is extruded and granulated and then the granules are dried in a stream of air.

| **Example F7:** Coated granules | |
|---|---|
| active ingredient | 3% |
| Polyethylene glycol (mol. wt. 200) | 3% |
| Kaolin | 94% |

The finely ground active ingredient is uniformly applied, in a mixer, to the kaolin moistened with polyethylene glycol. Non-dusty coated granules are obtained in this manner.

| **Example F8:** Suspension concentrate | | |
|---|---|---|
| active ingredient | | 40% |
| Ethylene glycol | | 10% |
| Nonylphenol polyethylene glycol | | 6% |
| Ether (15 mol of ethylene oxide) | | |
| Sodium lignosulfonate | | 10% |
| Carboxymethylcellulose | | 1% |
| Aqueous formaldehyde solution (37%) | | 0.2% |
| Aqueous silicone oil emulsion (75%) | | 0.8% |
| Water | | 32% |

The finely ground active ingredient is intimately mixed with the other formulation components giving a suspension concentrate from which suspensions of any desired concentration can be obtained by dilution with water.

| **Example F9:** Emulsifiable concentrates | a) | b) | c) |
|---|---|---|---|
| active ingredient | 25% | 40% | 50% |
| Calcium dodecylbenzenesulfonate | 5% | 8% | 6% |
| Castor oil polyethylene glycol ether (36 mol of ethylene oxide) | 5% | - | - |
| Tristyrylphenol polyethylene glycol ether (30 mol of ethylene oxide | - | 12% | 4% |
| Cyclohexanone | - | 15% | 20% |
| Xylene mixture | 65% | 25% | 20% |

Emulsions of any desired concentration can be produced from such concentrates by dilution with water.

| **Example F10:** Wettable powders | a) | b) | c) |
|---|---|---|---|
| active ingredient | 25% | 50% | 75% |
| Sodium lignosulfonate | 5% | 5% | - |
| Sodium laurylsulfate | 3% | - | 5% |
| Sodium diisobutylnapthalene-sulfonate | - | 6% | 10% |
| Octylphenol polyethylene glycol ether (7-8 mol of ethylene oxide) | - | 2% | - |
| Highly dispersed silicic acid | 5% | 10% | 10% |
| Kaolin | 62% | 27% | - |

The active ingredient is mixed with the other formulation components and the mixture is ground in a suitable mill, affording wettable powders which can be diluted with water to give suspensions of the desired concentration.

| **Example F11:** Emulsifiable concentrate | |
|---|---|
| active ingredient | 10% |
| Octylphenol polyethylene glycol ether (4-5 mol of ethylene oxide) | 3% |
| Calcium dodecylbenzenesulfonate | 3% |
| Castor oil polyglycol ether (36 mol of ethylene oxide) | 4% |
| Cyclohexanone | 30% |
| Xylene mixture | 50% |

Emulsions of any required concentration can be obtained from this concentrate by dilution with water.

A preferred type of formulation for diafenthiuron is WP (wettable powder) or SC (suspension concentrate), e.g., POLO™, Pegasus™.

Various aspects and embodiments of the present invention will now be illustrated in more detail by way of example. It will be appreciated that modification of detail may be made without departing from the scope of the invention.

### BIOLOGICAL EXAMPLES

The following bioassay methodology was utilized to generate the data included in the table:
5cm leaf discs were taken from fully expanded chinese cabbage leaves and placed with the underside facing upwards onto water agar in 5cm Petri dishes. The leaf discs are infested with between 30 and 40 mixed age aphids 24 hours prior to insecticide treatment. The leaf surface is sprayed with the appropriate test solutions in a Burkhard Potter Tower at an approximate water volume of 450 l/ha. Test containers are stored at 21 oC, 60%RH and 16:8 light/dark. Aphids were assessed for mortality 72 hours after treatment. Results are indicated in the Table below.

| Al | LC50 with 95% confidence limit (ppm) | | resistance factor at LC50 |
|---|---|---|---|
| | resistant strain+ | susceptible strain* | |
| diafenthiuron | 94.5 (75.5 - 119) | 310 (82.3 - 26248) | <1 |
| acetamiprid | 49.3 (35.2 - 72.0) | 0.55 (0.51 - 0.59) | 90 |
| clothianidin | 904 (478 - 3616) | 0.33 (0.28 - 0.38) | 2738 |
| dinotefuran | 538 (435 - 696) | 9.95 (8.21 - 12.5) | 54 |
| nitenpyram | 237 (93.7 - 3566) | 1.26 (1.03 - 1.61) | 188 |
| thiacloprid | >1000 | 0.38 (0.34 - 0.42) | >2632 |
| thiamethoxam | 148 (128 - 172) | 0.35 (0.3 - 0.41) | 423 |

| | | | |
|---|---|---|---|
| + the neonicotinoid insecticide resistant aphid strain was collected from a peach orchard in the Avignon region of Southern France on the 17^{th} June 2009; * the neonicotinoid insecticide susceptible strain 4106A was provided by Rothamsted Research. | | | |

## Claims

1. A method of controlling insects from the Aphididae family, which insects are resistant to a neonicotinoid insecticide, which method comprises applying the active ingredient diafenthiuron in free form or in agrochemically acceptable salt form to said neonicotinoid resistant insects.

2. The method according to claim 1 wherein said insects is one or more of Acyrthosiphum pisum, Aphis citricola, Aphis craccivora, Aphis fabae, Aphis frangulae, Aphis glycines, Aphis gossypii, Aphis nasturtii, Aphis pomi, Aphis spiraecola, Aulacorthum solani, Brachycaudus helichrysi, Brevicoryne brassicae, Diuraphis noxia, Dysaphis devecta, Dysaphis plantaginea, Eriosoma lanigerum, Hyalopterus pruni, Lipaphis erysimi, Macrosiphum avenae, Macrosiphum euphorbiae, Macrosiphum rosae, Myzus cerasi F., Myzus nicotianae, Myzus persicae, Nasonovia ribisnigri, Pemphigus bursarius, Phorodon humuli, Rhopalosiphum insertum Wa, Rhopalosiphum maidis Fitch, Rhopalosiphum padi L., Schizaphis graminum Rond., Sitobion avenae, Toxoptera aurantii, Toxoptera citricola, and Phylloxera vitifoliae.

3. The method according to claim 2, wherein said insects are one or more of Aphis gossypii and Myzus persicae.

4. The method according to any one of claims 2 to 3, wherein the diafenthiuron is applied to a crop of useful plants selected from cereals; beet; fruit; leguminous crops; cucurbits; fibre plants; vegetables; and also tobacco, nuts, coffee, eggplants, sugarcane, tea, pepper, grapevines, hops, the plantain family, latex plants, lawn, turf, fodder grass, and ornamentals.

5. The method according to any one of the preceding claims, wherein the active ingredient is diafenthiuron dihydrate.

6. The method according to any one of the preceding claims wherein the active ingredient is in the form of a composition, said composition additionally comprising an agriculturally acceptable diluent or carrier.

7. The method according to any one of the preceding plants wherein said active ingredient or composition is formulated as a water dispersible granule.

8. Use of diafenthiuron in free form or in agrochemically acceptable salt form to control neonicotinoid resistant insects from the Aphididae family.

9. Use according to claim 8, wherein said neonicotinoid resistant insects is one or more of a neonicotinoid resistant Acyrthosiphum pisum, Aphis citricola, Aphis craccivora, Aphis fabae, Aphis frangulae, Aphis glycines, Aphis gossypii, Aphis nasturtii, Aphis pomi, Aphis spiraecola, Aulacorthum solani, Brachycaudus helichrysi, Brevicoryne brassicae, Diuraphis noxia, Dysaphis devecta, Dysaphis plantaginea, Eriosoma lanigerum, Hyalopterus pruni, Lipaphis erysimi, Macrosiphum avenae, Macrosiphum euphorbiae, Macrosiphum rosae, Myzus cerasi F., Myzus nicotianae, Myzus persicae, Nasonovia ribisnigri, Pemphigus bursarius, Phorodon humuli, Rhopalosiphum insertum Wa, Rhopalosiphum maidis Fitch, Rhopalosiphum padi L., Schizaphis graminum Rond., Sitobion avenae, Toxoptera aurantii, Toxoptera citricola, and Phylloxera vitifoliae.

10. A method of controlling plant viruses spread by insects from the Aphididae family, which comprises applying the active ingredient diafenthiuron in free form or in agrochemically acceptable salt form to neonicotinoid resistant insects of the Aphididae family, which insects carry said plant viruses.

11. The method according to claim 10 wherein said virus is one or more of Sobemovirus, Caulimovirus (Caulimoviridae), Closterovirus (Closteroviridae), Sequivirus (Sequiviridae), Enamovirus (Luteoviridae), Luteovirus (Luteoviridae), Polerovirus (Luteoviridae), Umbravirus, Nanovirus (Nanoviridae), Cytorhabdovirus (Rhabdoviridae), Nucleorhabdovirus (Rhabdoviridae).

12. The method according to any one of claims 10 or 11, wherein said insect is one or more of Acyrthosiphum pisum, Aphis citricola, Aphis craccivora, Aphis fabae, Aphis frangulae, Aphis glycines, Aphis gossypii, Aphis nasturtii, Aphis pomi, Aphis spiraecola, Aulacorthum solani, Brachycaudus helichrysi, Brevicoryne brassicae, Diuraphis noxia, Dysaphis devecta, Dysaphis plantaginea, Eriosoma lanigerum, Hyalopterus pruni, Lipaphis erysimi, Macrosiphum avenae, Macrosiphum euphorbiae, Macrosiphum rosae, Myzus cerasi F., Myzus nicotianae, Myzus persicae, Nasonovia ribisnigri, Pemphigus bursarius, Phorodon humuli, Rhopalosiphum insertum Wa, Rhopalosiphum maidis Fitch, Rhopalosiphum padi L., Schizaphis graminum Rond., Sitobion avenae, Toxoptera aurantii, Toxoptera citricola, and Phylloxera vitifoliae.

## Patentansprüche

1. Verfahren zur Bekämpfung von Insekten aus der Familie der Aphididae, wobei die Insekten resistent gegenüber einem Neonicotinoidinsektizid sind, und wobei das Verfahren das Aufbringen des Wirkstoffs Diafenthiuron in freier Form oder in agrochemisch akzeptabler Salzform auf die Neonicotinoid-resistenten Insekten umfasst.

2. Verfahren nach Anspruch 1, wobei es sich bei den Insekten um eines oder mehrere von Acyrthosiphum pisum, Aphis citricola, Aphis craccivora, Aphis fabae, Aphis frangulae, Aphis glycines, Aphis gossypii, Aphis nasturtii, Aphis pomi, Aphis spiraecola, Aulacorthum solani, Brachycaudus helichrysi, Brevicoryne brassicae, Diuraphis noxia, Dysaphis devecta, Dysaphis plantaginea, Eriosoma lanigerum, Hyalopterus pruni, Lipaphis erysimi, Macrosiphum avenae, Macrosiphum euphorbiae, Macrosiphum rosae, Myzus cerasi F., Myzus nicotianae, Myzus persicae, Nasonovia ribisnigri, Pemphigus bursarius, Phorodon humuli, Rhopalosiphum insertum Wa, Rhopalosiphum maidis Fitch, Rhopalosiphum padi L., Schizaphis graminum Rond., Sitobion avenae, Toxoptera aurantii, Toxoptera citricola und Phylloxera vitifoliae handelt.

3. Verfahren nach Anspruch 2, wobei es sich bei den Insekten um eines oder mehrere von Aphis gossypii und Myzus persicae handelt.

4. Verfahren nach einem der Ansprüche 2 bis 3, wobei das Diafenthiuron auf eine Nutzpflanzenkultur aufgebracht wird, ausgewählt aus Getreide; Rübe; Frucht; Hülsenfrüchten; Kürbisgewächsen; Faserpflanzen; Gemüse; und auch Tabak, Nüssen, Kaffee, Auberginen, Zuckerrohr, Tee, Pfeffer, Weinreben, Hopfen, der Wegerich-Familie, Latex-Pflanzen, Gras, Rasen, Futtergras und Zierpflanzen.

5. Verfahren nach einem der vorhergehenden Ansprüche, wobei der Wirkstoff Diafenthiuron-Dihydrat ist.

6. Verfahren nach einem der vorhergehenden Ansprüche, wobei der Wirkstoff in Form einer Zusammensetzung vorliegt, wobei die Zusammensetzung zusätzlich ein landwirtschaftlich akzeptables Verdünnungsmittel oder einen landwirtschaftlich akzeptablen Träger umfasst.

7. Verfahren nach einem der vorhergehenden Ansprüche, wobei der Wirkstoff oder die Zusammensetzung als wasserdispergierbares Granulat formuliert ist.

8. Verwendung von Diafenthiuron in freier Form oder in agrochemisch akzeptabler Salzform zur Bekämpfung Neonicotinoid-resistenter Insekten aus der Familie der Aphididae.

9. Verwendung nach Anspruch 8, wobei es sich bei den Neonicotinoid-resistenten Insekten um eines oder mehrere von einem Neonicotinoid-resistenten Acyrthosiphum pisum, Aphis citricola, Aphis craccivora, Aphis fabae, Aphis frangulae, Aphis glycines, Aphis gossypii, Aphis nasturtii, Aphis pomi, Aphis spiraecola, Aulacorthum solani, Brachycaudus helichrysi, Brevicoryne brassicae, Diuraphis noxia, Dysaphis devecta, Dysaphis plantaginea, Eriosoma lanigerum, Hyalopterus pruni, Lipaphis erysimi, Macrosiphum avenae, Macrosiphum euphorbiae, Macrosiphum rosae, Myzus cerasi F., Myzus nicotianae, Myzus persicae, Nasonovia ribisnigri, Pemphigus bursarius, Phorodon humuli, Rhopalosiphum insertum Wa, Rhopalosiphum maidis Fitch, Rhopalosiphum padi L., Schizaphis graminum Rond., Sitobion avenae, Toxoptera aurantii, Toxoptera citricola und Phylloxera vitifoliae handelt.

10. Verfahren zur Bekämpfung von Pflanzenviren, die von Insekten aus der Familie der Aphididae verbreitet werden, umfassend das Aufbringen des Wirkstoffs Diafenthiuron in freier Form oder in agrochemisch akzeptabler Salzform auf Neonicotinoid-resistente Insekten der Familie der Aphididae, wobei die Insekten die Pflanzenviren tragen.

11. Verfahren nach Anspruch 10, wobei es sich bei dem Virus um einen oder mehrere von Sobemovirus, Caulimovirus (Caulimoviridae), Closterovirus (Closteroviridae), Sequivirus (Sequiviridae), Enamovirus (Luteoviridae), Luteovirus (Luteoviridae), Polerovirus (Luteoviridae), Umbravirus, Nanovirus (Nanoviridae), Cytorhabdovirus (Rhabdoviridae), Nucleorhabdovirus (Rhabdoviridae) handelt.

12. Verfahren nach einem der Ansprüche 10 oder 11, wobei es sich bei dem Insekt um eines oder mehrere von Acyrthosiphum pisum, Aphis citricola, Aphis craccivora, Aphis fabae, Aphis frangulae, Aphis glycines, Aphis gossypii, Aphis nasturtii, Aphis pomi, Aphis spiraecola, Aulacorthum solani, Brachycaudus helichrysi, Brevicoryne brassicae, Diuraphis noxia, Dysaphis devecta, Dysaphis plantaginea, Eriosoma lanigerum, Hyalopterus pruni, Lipaphis erysimi, Macrosiphum avenae, Macrosiphum euphorbiae, Macrosiphum rosae, Myzus cerasi F., Myzus nicotianae, Myzus persicae, Nasonovia ribisnigri, Pemphigus bursarius, Phorodon humuli, Rhopalosiphum insertum Wa, Rhopalosiphum maidis Fitch, Rhopalosiphum padi L., Schizaphis graminum Rond., Sitobion avenae, Toxoptera aurantii, Toxoptera citricola und Phylloxera vitifoliae handelt.

## Revendications

1. Procédé de lutte contre des insectes de la famille des *Aphididae,* lesquels insectes sont résistants à un insecticide néonicotinoïde, lequel procédé comprend l'application du composant actif diafenthiuron sous forme libre ou sous forme d'un sel agrochimiquement acceptable sur lesdits insectes résistants aux néonicotinoïdes.

2. Procédé selon la revendication 1, dans lequel lesdits insectes consistent en un ou plusieurs parmi *Acyrthosiphum pisum, Aphis citricola, Aphis craccivora, Aphis fabae, Aphis frangulae, Aphis glycines, Aphis gossypii, Aphis nasturtii, Aphis pomi, Aphis spiraecola, Aulacorthum solani, Brachycaudus helichrysi, Brevicoryne brassicae, Diuraphis noxia, Dysaphis devecta, Dysaphis plantaginea, Eriosoma lanigerum, Hyalopterus pruni, Lipaphis erysimi, Macrosiphum avenae, Macrosiphum euphorbiae, Macrosiphum rosae, Myzus cerasi* F., *Myzus nicotianae, Myzus persicae, Nasonovia ribisnigri, Pemphigus bursarius, Phorodon humuli, Rhopalosiphum insertum* Wa, *Rhopalosiphum maidis* Fitch, *Rhopalosiphum padi* L., *Schizaphis graminum* Rond., *Sitobion avenae, Toxoptera aurantii, Toxoptera citricola* et *Phylloxera vitifoliae.*

3. Procédé selon la revendication 2, dans lequel lesdits insectes consistent en un ou plusieurs parmi *Aphis gossypii* et *Myzus persicae.*

4. Procédé selon l'une quelconque des revendications 2 et 3, dans lequel on applique le diafenthiuron sur une culture de plantes utiles choisies parmi les céréales ; les betteraves ; les plantes fruitières ; les plantes cultivées légumineuses ; les cucurbitacées ; les plantes fibreuses ; les légumes ; et également le tabac, les plantes à fruits secs, le caféier, les aubergines, la canne à sucre, le théier, le poivron, la vigne, le houblon, la famille des plantains, les plantes à latex, la pelouse, le gazon, les graminées fourragères et les plantes ornementales.

5. Procédé selon l'une quelconque des revendications précédentes, dans lequel le composant actif est le diafenthiuron dihydrate.

6. Procédé selon l'une quelconque des revendications précédentes, dans lequel le composant actif est sous la forme d'une composition, ladite composition comprenant en outre une matière de support ou diluant acceptable en agriculture.

7. Procédé selon l'une quelconque des revendications précédentes, dans lequel ledit composant actif ou ladite composition est formulé(e) sous forme d'un granule dispersable dans l'eau.

8. Utilisation de diafenthiuron sous forme libre ou sous forme d'un sel agrochimiquement acceptable, pour la lutte contre des insectes résistants aux néonicotinoïdes, de la famille des *Aphididae.*

9. Utilisation selon la revendication 8, dans laquelle lesdits insectes résistants aux néonicotinoïdes consistent en un ou plusieurs parmi un *Acyrthosiphum pisum, Aphis citricola, Aphis craccivora, Aphis fabae, Aphis frangulae, Aphis glycines, Aphis gossypii, Aphis nasturtii, Aphis pomi, Aphis spiraecola, Aulacorthum solani, Brachycaudus helichrysi, Brevicoryne brassicae, Diuraphis noxia, Dysaphis devecta, Dysaphis plantaginea, Eriosoma lanigerum, Hyalopterus pruni, Lipaphis erysimi, Macrosiphum avenae, Macrosiphum euphorbiae, Macrosiphum rosae, Myzus cerasi* F., *Myzus nicotianae, Myzus persicae, Nasonovia ribisnigri, Pemphigus bursarius, Phorodon humuli, Rhopalosiphum insertum* Wa, *Rhopalosiphum maidis* Fitch, *Rhopalosiphum padi* L., *Schizaphis graminum* Rond., *Sitobion avenae, Toxoptera aurantii, Toxoptera citricola* et *Phylloxera vitifoliae* résistants aux néonicotinoïdes.

10. Procédé de lutte contre des virus de plantes propagés par des insectes de la famille des *Aphididae,* qui comprend l'application du composant actif diafenthiuron sous forme libre ou sous forme de sel agrochimiquement acceptable, sur des insectes résistants aux néonicotinoïdes, de la famille des *Aphididae,* lesquels insectes portent lesdits virus de plantes.

11. Procédé selon la revendication 10, dans lequel ledit virus consiste en un ou plusieurs parmi les Sobemovirus, Caulimovirus (Caulimoviridae), Closterovirus (Closteroviridae), Sequivirus (Sequiviridae), Enamovirus (Luteoviridae), Luteovirus (Luteoviridae), Polerovirus (Luteoviridae), Umbravirus, Nanovirus (Nanoviridae), Cytorhabdovirus (Rhabdoviridae), Nucleorhabdovirus (Rhabdoviridae).

12. Procédé selon l'une quelconque des revendications 10 et 11, dans lequel ledit insecte consiste en un ou plusieurs parmi *Acyrthosiphum pisum, Aphis citricola, Aphis craccivora, Aphis fabae, Aphis frangulae, Aphis glycines, Aphis gossypii, Aphis nasturtii, Aphis pomi, Aphis spiraecola, Aulacorthum solani, Brachycaudus helichrysi, Brevicoryne brassicae, Diuraphis noxia, Dysaphis devecta, Dysaphis plantaginea, Eriosoma lanigerum, Hyalopterus pruni, Lipaphis erysimi, Macrosiphum avenae, Macrosiphum euphorbiae, Macrosiphum rosae, Myzus cerasi* F., *Myzus nicotianae, Myzus persicae, Nasonovia ribisnigri, Pemphigus bursarius, Phorodon humuli, Rhopalosiphum insertum* Wa, *Rhopalosiphum maidis* Fitch, *Rhopalosiphum padi* L., *Schizaphis graminum* Rond., *Sitobion avenae, Toxoptera aurantii, Toxoptera citricola* et *Phylloxera vitifoliae.*
